# EUROPEAN PATENT APPLICATION

(11) **EP 3 540 478 A2**
(43) Date of publication of application: **18.09.2019**
(21) Application number: 19162293.5
(22) Date of filing: 12.03.2019
(51) Int. Cl.: G02B 1/115, G02B 5/08, G02B 5/28, G02B 1/18, G02B 27/00

(54) **OPTICAL DEVICE INCLUDING STACK OF OPTICAL LAYERS WITH FUNCTIONAL TREATMENT**

(30) Priority: 13.03.2018 US 201862642473 P
(71) Applicant: Viavi Solutions Inc., San Jose, CA 95002 (US)
(72) Inventor: ZIEBA, Jaroslaw, Santa Rosa, CA California 95405 (US); OCKENFUSS, Georg, Santa Rosa, CA California 95404 (US); BILGER, Markus, Santa Rosa, CA California 95405 (US)
(74) Representative: Murgitroyd & Company

(57) **Abstract**

An optical device includes a substrate and a stack of layers including metal oxides. Another optical device includes a stack of layers including metal oxides and a surface treating agent. A method of making an optical device is also disclosed.

## Description

### RELATED APPLICATION

The present application claims priority to U.S. Provisional Application No. 62/642,473, filed on March 13, 2018, the entire disclosure of which is hereby incorporated by reference.

### FIELD OF THE INVENTION

The present disclosure generally relates to an optical device including a substrate; and an optical stack of layers including metal oxides. An optical device can also include an optical stack of layers including metal oxides; and a surface treating agent. An optical device can also include a substrate; an optical stack of layers including metal oxides; and a surface treating agent. A method of making optical devices is also disclosed.

### BACKGROUND OF THE INVENTION

Optical devices are becoming increasingly important with the advent of semi-autonomous, autonomous, remotely controlled vehicles, and smart phones. However, the use of optical devices raises a concern as to whether the optical devise can withstand mechanical, optical, and environmental factors that could damage or adversely impact the function of the optical device. For example, using a smartphone near an ocean environment exposes the glass of the optical device to various environmental conditions, as well as the mechanical hazards, such as dropping the phone, abrasion from sand, etc. Optical devices are increasingly used in areas that require additional protections for the device in order to ensure durability and functionality.

### SUMMARY OF THE INVENTION

In an aspect, there is disclosed an optical device including a substrate; and an optical stack of layers including metal oxides.

The optical device may further comprise a surface treating agent.

The substrate may be glass.

The optical stack of layers may include at least one of an anti-reflective coating, a bandpass filter coating, notch filter coating, a dichroic filter coating, a mirror coating, and combinations thereof.

The metal oxides may include titanium dioxide (TiO2), zirconium dioxide (ZrO2), niobium pentoxide (Nb2O5), tantalum pentoxide (Ta2O5), hafnium dioxide (HfO2), aluminum trioxide (Al2O3), silicon dioxide (SiO2), scandium trioxide (Sc2O3), yttrium trioxide (Y2O3), magnesium dioxide (MgO2), SiAlOx, SiOxNy, SiAlOxNy, and mixtures thereof.

The optical stack of layers may include two layers of alternating different metal oxides.

The optical stack of layers may include two layers of alternating different metal oxides with a top layer of aluminum trioxide.

The optical stack of layers may include two layers of alternating different metal oxides with a bottom layer of aluminum trioxide.

Optionally, the metal oxide may be aluminum trioxide, wherein the aluminum trioxide is a mechanical and chemical barrier.

The optical stack of layers may include two layers of alternating different metal oxides with a top layer of silicon dioxide.

The surface treating agent may include a perfluoro(poly)ether group-containing silane compound.

The optical device may exhibit mechanical and environmental durability for use under harsh mechanical and environmental conditions.

The substrate may have a first surface including an optical stack and a surface treating agent, and the substrate may have a second surface including a transparent optical conductor.

Optionally, the transparent optical conductor includes indium tin oxide or indium titanium oxide.

The optical device may further comprise on the second surface a hydrophilic layer or super-hydrophilic layer.

The hydrophilic layer may include a material chosen from polyurethanes, siloxanes, metal oxides, polyglycols, and mixtures thereof.

In another aspect, there is disclosed an optical device including an optical stack of layers including metal oxides; and a surface treating agent.

Optionally, the optical device further comprises a substrate.

In another aspect, there is disclosed method of making an optical device, comprising forming an optical stack of layers including metal oxides by a long throw magnetron sputtering process; and applying a surface treating agent onto a top layer of the optical stack of layers to form the optical device.

The method may further comprise applying the optical device onto a substrate.

Additional features and advantages of various embodiments will be set forth, in part, in the description that follows, and will, in part, be apparent from the description, or may be learned by the practice of various embodiments. The objectives and other advantages of various embodiments will be realized and attained by means of the elements and combinations particularly pointed out in the description herein.

### BRIEF DESCRIPTION OF THE DRAWINGS

The present disclosure in its several aspects and embodiments can be more fully understood from the detailed description and the accompanying drawings, wherein:
FIGs. 1A-1C illustrate a cross-section of an optical device according to various aspects of the invention;
FIG. 2A is a cross-section of an optical device according to another aspect of the invention;
FIG. 2B is a cross-section of an optical device according to another aspect of the invention;
FIG. 3A is a cross-section of an optical device according to another aspect of the invention;
FIG. 3B is a cross-section of an optical device according to another aspect of the invention;
FIG. 4 is a line graph illustrating the reflectance percentage of the optical devices illustrated in FIGS. 2A, 2B, 3A, and 3B at an angle of incidence of 0°, according to another aspect of the invention;
FIG. 5 is a line graph illustrating the reflectance percentage of an optical device at various angles of incident (AOI) according to an aspect of the invention;
FIG. 6 is a line graph illustrating the reflectance percentage of an optical device at various angles of incident (AOI) according to an aspect of the invention;
FIG. 7 is a line graph illustrating the reflectance percentage of an optical device at various angles of incident (AOI) according to an aspect of the invention;
FIG. 8 is a line graph illustrating the reflectance percentage of an optical device at various angles of incident (AOI) according to an aspect of the invention;
FIG. 9 is a line graph illustrating the reflectance percentage of an optical device at various angles of incident (AOI) according to an aspect of the invention;
FIG. 10 is a line graph illustrating the reflectance percentage of an optical device at various angles of incident (AOI) according to an aspect of the invention; and
FIGs. 11A-B are each an optical device according to another aspect of the invention.

Throughout this specification and figures like reference numbers identify like elements.

### DETAILED DESCRIPTION OF THE INVENTION

It is to be understood that both the foregoing general description and the following detailed description are exemplary and explanatory only, and are intended to provide an explanation of various embodiments of the present teachings. The layers/components shown in each Figure may be described with regard to a particular Figure, but it is understood that the description of a particular layer/component would be applicable to the equivalent layer/component in the other Figures.

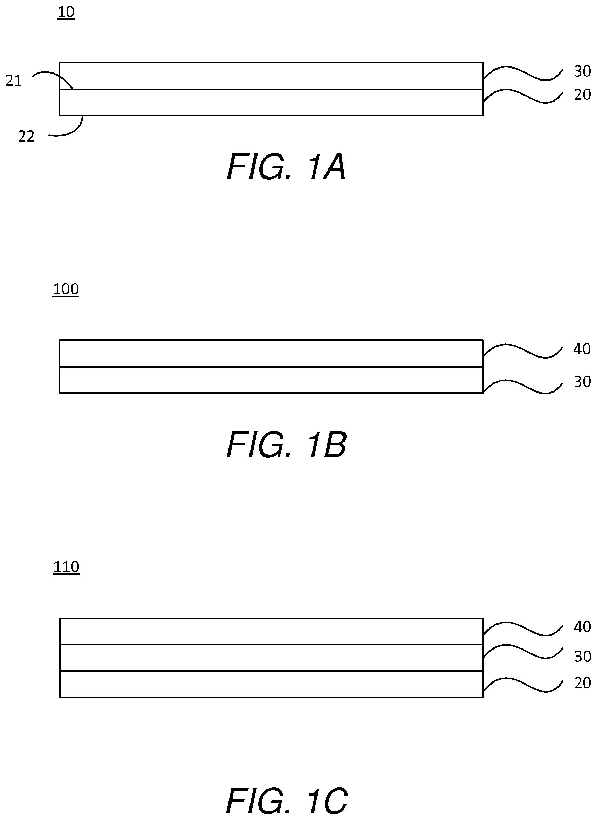

In its broad and varied embodiments, there is disclosed an optical device 10 including a substrate 20; and an optical stack 30 of layers including metal oxides, as shown in FIG. 1A. There is also disclosed an optical device 100 including an optical stack 30 of layers including metal oxides; and a surface treating agent 40, as shown in FIG. 1B. Further, there is disclosed an optical device 110 including a substrate 20, an optical stack 30 of layers including metal oxides; and a surface treating agent 40, as shown in FIG. 1C. The optical device 10 can exhibit mechanical and environmental durability for use under harsh mechanical and environmental conditions.

The disclosed optical devices 10, 100, 110 can have at least one of the following properties: improved mechanical durability, improved environmental durability, improved chemical durability, smudge resistance, and controlled surface roughness.

Improved mechanical durability includes durability in view of scratches, abrasion, dents, breakage, wear, etc. Improved environmental durability includes durability in a variety of environmental conditions, such as high temperature, high humidity, salt, fog, UV exposure.

The substrate 20 of the optical device 10, 110 can be any material capable of being coated. Non-limiting examples of a substrate 20 include plastics, synthetic sapphire, glass, synthetic diamond, optical ceramic materials, optical quality polymers, and light transmitting substrates with absorption spectra as required by the functional application of the optical device 10, 110, such as silicon. Optical quality polymers include polycarbonates, acrylates, and cyclic olefin polymers. Various types of glass can be used including chemically strengthened glass. The substrate 20 can have a first surface 21 and a second surface 22 opposite the first surface, as shown in FIG. 1A.

The optical stack 30 of optical devices, 10, 100, 110 can include layers of metal oxides. Non-limiting examples of metal oxides include oxides include titanium dioxide (TiO₂), zirconium dioxide (ZrO₂), niobium pentoxide (Nb₂O₅), tantalum pentoxide (Ta₂O₅), hafnium dioxide (HfO₂), aluminum trioxide (Al₂O₃), silicon dioxide (SiO₂), scandium trioxide (Sc₂O₃), yttrium trioxide (Y₂O₃), magnesium dioxide (MgO₂), SiAlOₓ, SiOₓN_{y}, SiAlOₓN_{y}, and mixtures thereof. The optical stack 30 of layers can include two layers of alternating different metal oxides. The optical stack 30 of layers can include two layers of alternating different metal oxides with a top layer of aluminum trioxide. The optical stack 30 of layers can include two layers of alternating different metal oxides with a top layer of silicon dioxide.

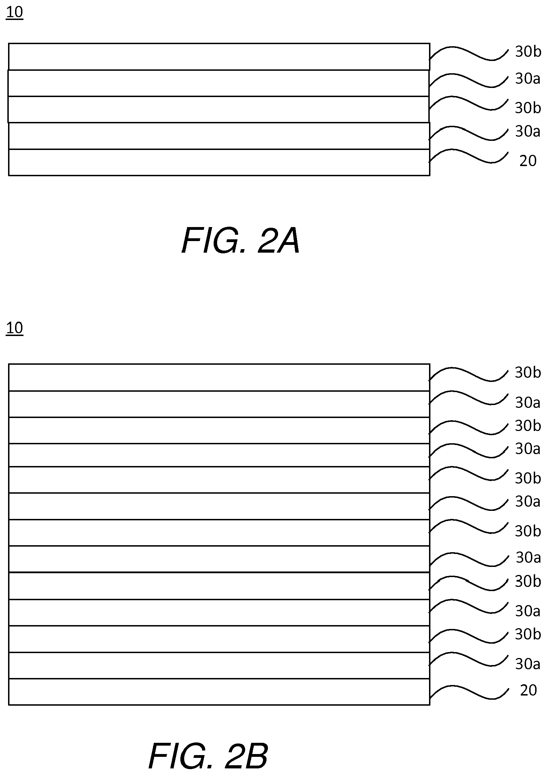

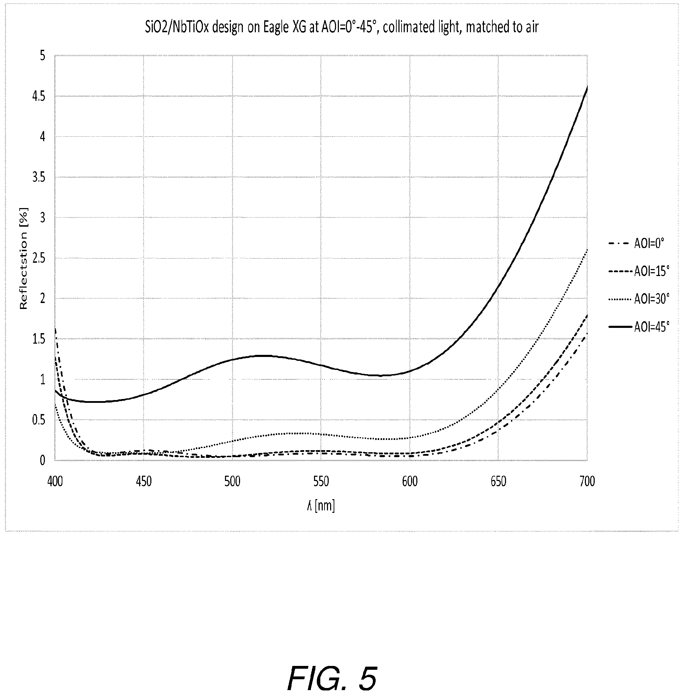

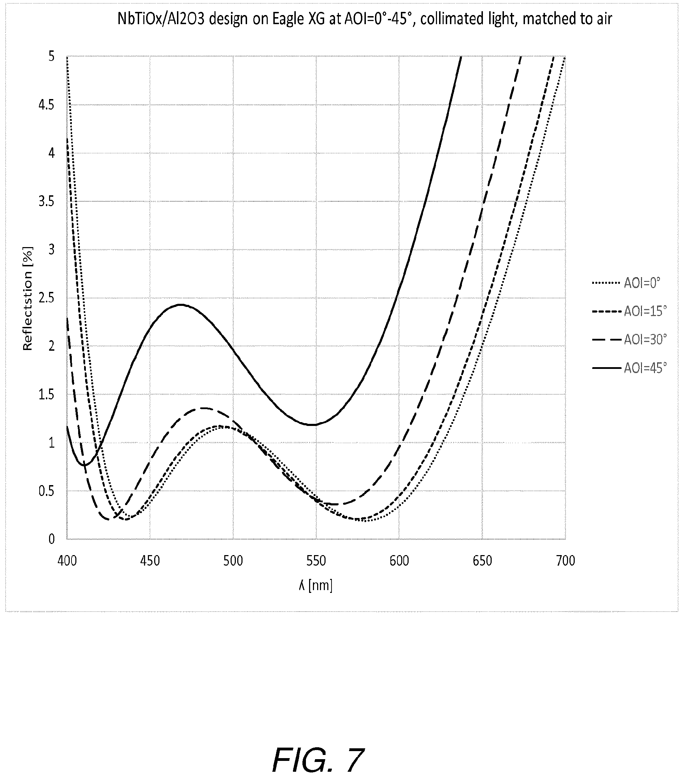

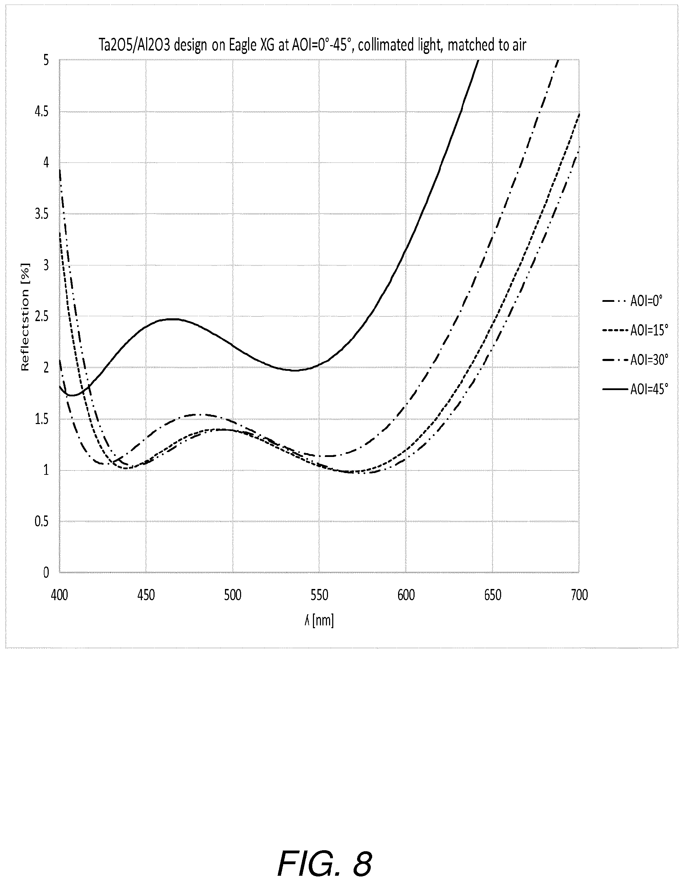

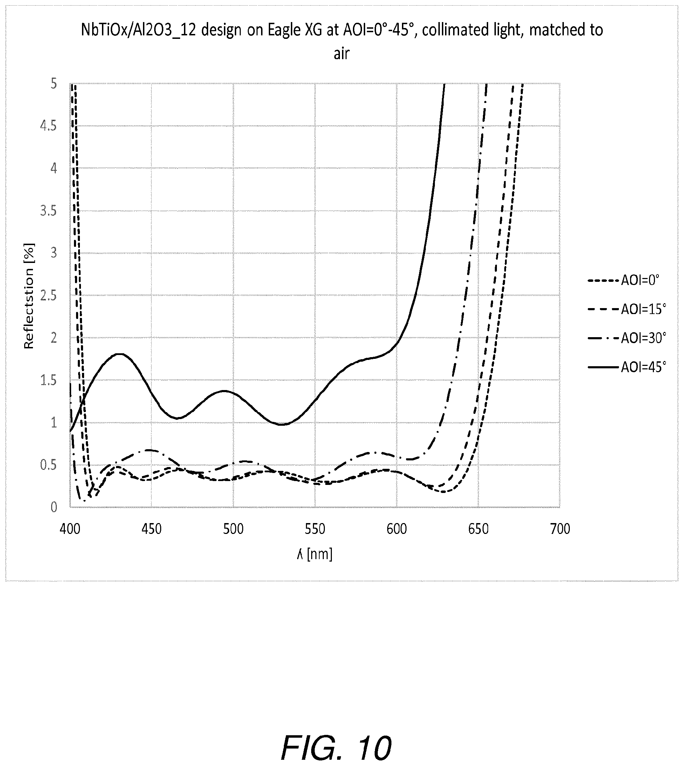

FIGs. 2A and 2B illustrate an optical device10 including a substrate 20 of glass and an optical stack 30. The optical stack 30 includes alternating layers of two different metal oxides for a total of four layers (FIG. 2A). In an aspect, the optical stack 30 can be as follows: NbTiOₓ 11.28 nm (30a)/ SiO₂ 34.44 nm (30b)/ NbTiOₓ 105.43 nm (30a)/ SiO₂ 84.45 nm (30b). The percent reflectance for this optical device 10 can be seen in FIG. 5. In another aspect, the optical stack 30 can be as follows: NbTiOₓ 14.72 nm (30a)/ Al₂O₃ 25.24 nm (30b)/ NbTiOₓ 65.31 nm (30a)/ Al₂O₃ 71.91 nm (30b). The percent reflectance for this optical device 10 can be seen in FIG. 7. In another aspect, the optical stack 30 can be as follows: Ta₂O₅ 13.40 nm (30a)/ Al₂O₃ 37.40 nm (30b)/ Ta₂O₅ 61.24 nm (30a)/ Al₂O₃ 75.54 nm (30b). The percent reflectance for this optical device 10 can be seen in FIG. 8. The optical stack 30 includes alternating layers of two different metal oxides for a total of twelve layers (FIG. 2B). In an aspect, the optical stack 30 can be as follows: NbTiOₓ 8.66 nm (30a)/ Al₂O₃ 40.25 nm (30b)/ NbTiOₓ 93.32 nm (30a)/ Al₂O₃ 12.58 nm (30b) / NbTiOₓ 23.32 nm (30a)/ Al₂O₃ 28.76 nm (30b)/ NbTiOₓ 109.23 nm (30a)/ Al₂O₃ 85.50 nm (30b) / NbTiOₓ 9.12 nm (30a)/ Al₂O₃ 37.46 nm (30b)/ NbTiOₓ 54.62 nm (30a)/ Al₂O₃ 74.34 nm (30b). The percent reflectance for this optical device 10 can be seen in FIG. 10. A surface treating agent 40 can be applied to each of the top layers of the optical stack 30 in each of FIGs. 2A and 2B.

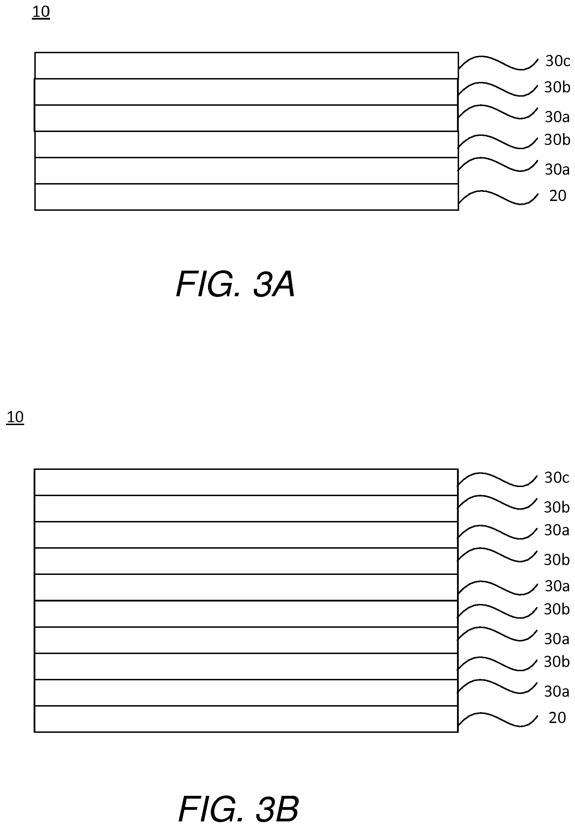

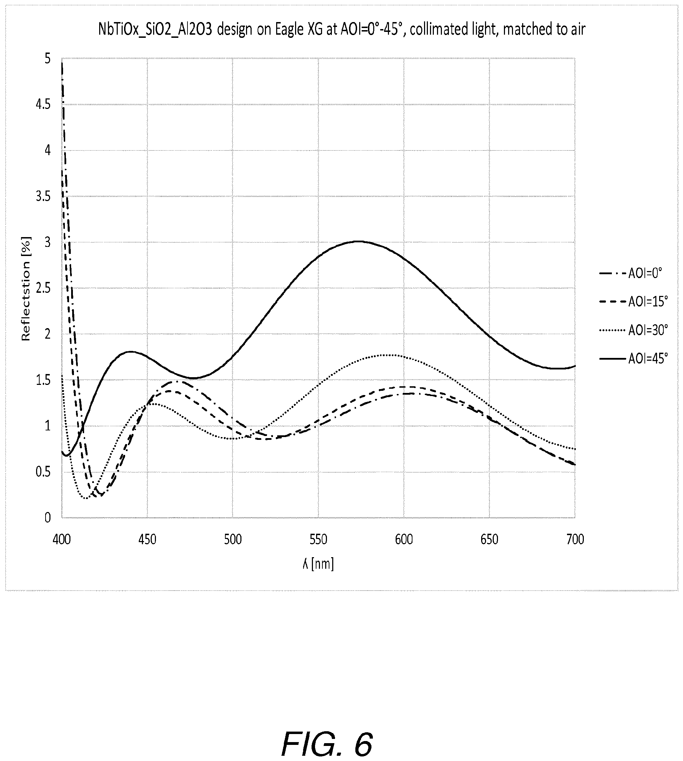

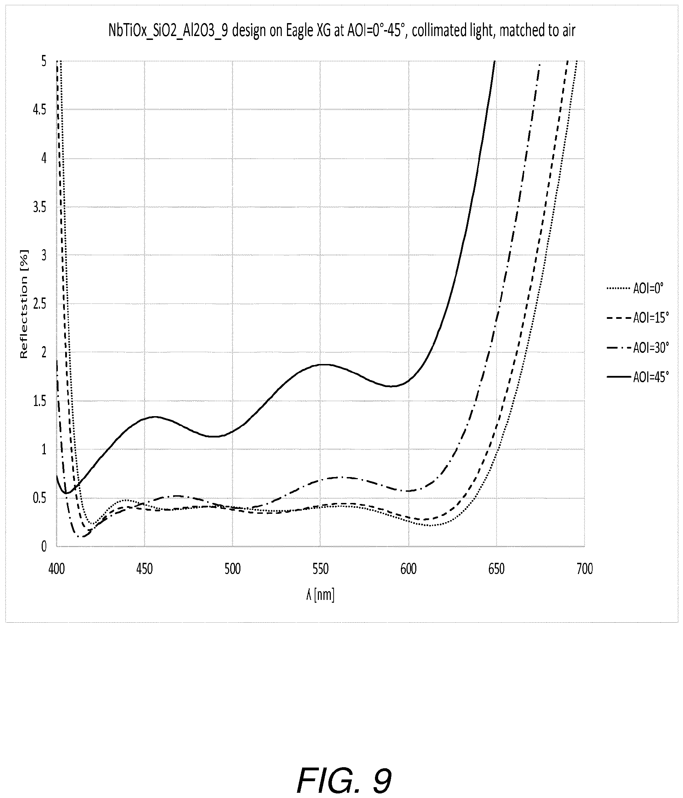

FIGs. 3A and 3B illustrate an optical device 10 including a substrate 20 of glass and an optical stack 30. The optical stack 30 includes alternating layers of two different metal oxides with a top layer having a different metal oxide, such as either aluminum trioxide or silicon dioxide. FIG. 3A illustrates an optical stack 30 as follows: NbTiOₓ 13.78 nm (30a)/ SiO₂ 33.93 nm (30b)/ NbTiOₓ 116.58 nm (30a)/ SiO₂ 26.70 nm (30b) / Al₂O₃ 50.00 nm (30c). The percent reflectance for this optical device 10 can be seen in FIG. 6. FIG. 3B illustrates an optical stack 30 as follows: NbTiOₓ 11.47 nm (30a)/ SiO₂ 35.02 nm (30b)/ NbTiOₓ 120.91 nm (30a)/ SiO₂ 28.13 nm (30b) / NbTiOₓ 36.31 nm (30a)/ SiO₂ 16.98 nm (30b)/ NbTiOₓ 62.16 nm (30a)/ SiO₂ 24.08 nm (30b) / Al₂O₃ 50.00 nm (30c). The percent reflectance for this optical device 10 can be seen in FIG. 9. A surface treating agent 40 can be applied to each of the top layers of the optical stack 30 in each of FIGs. 3A and 3B.

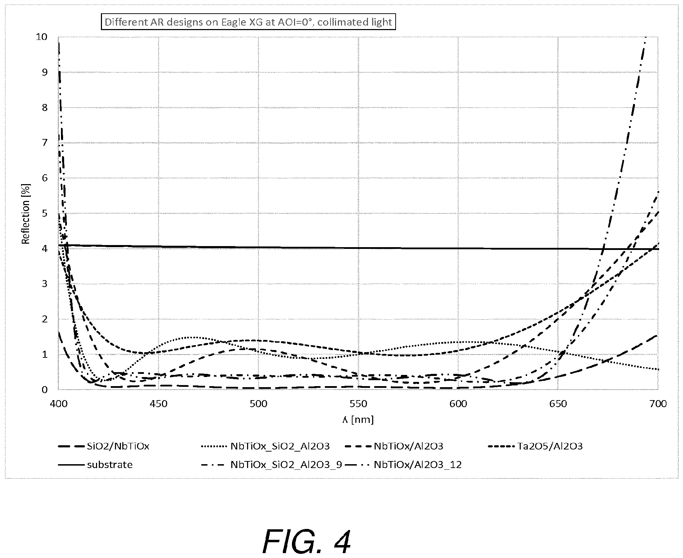

The optical stack 30 of layers can include coatings with various functional properties. In an aspect, the optical stack 30 of layers can include more than one functional property. The optical stack 30 of layers can include at least one of an anti-reflective coating, a bandpass filter coating, notch filter coating, a dichroic filter coating, a mirror coating, and combinations thereof. It is noted that the disclosed coatings can contain more than one layer, for example, a bandpass filter coating can include multiple layers. FIG. 4 is a line graph illustrating the reflectance of the optical devices 10 illustrated in FIGS 2A-3B as compared to the substrate 20 glass without an optical stack 30.

FIGs. 1A-3B illustrate various optical devices 10, 100, 110 contemplated herein. These are exemplary in nature. It should be appreciated that the order of the layers and the number of the layers in the optical stack 30 can vary. The layers of the optical stack 30 are described more fully below.

A layer in the optical stack 30 can be an antireflective coating. The antireflective coating can be a dielectric stack and can reduce the light reflection on an interface with the substrate 20. Suitable dielectrics for forming the dielectric stack include metal oxides such as TiO₂, Ta₂O₅, ZrO₂, and SiO₂, which are optically isotropic and can exhibit high transparency in the visible wavelength spectrum range (e.g., from 400nm to 700nm). The antireflective coating can be a stack including a first plurality of dielectric layers having a first refractive index, such as a low refractive index, for example, SiO₂ or magnesium fluoride (MgF₂), interleaved with at least a second plurality of dielectric layers having a second refractive index, such as a high refractive index. Non-limiting examples of high refractive index materials include niobium oxide, tantalum oxide, aluminum oxide, titanium oxide, zirconium oxide, and their combinations. The antireflective coating can be formed of a stack of layers of NbTiOₓ, SiO₂, or the like.

The optical device 10, 100, 110 can include an optical stack 30 including a bandpass filter. The bandpass filter can be realized by a full stack of dielectric low and high refractive materials. Each layer can be deposited as a quarter-wave (QW) thickness at the wavelength of the desired filter. Each partial-reflector, which may be comprised of only a single layer, is called a quarter-wave stack (QWS). The bandwidth of the filter is a function of the reflectance of quarter-wave stacks in the structure. The center wavelength of the pass-band is determined by the thickness of the spacer dielectric material. The dielectric materials used for the quarter and/or half-wave layers have indices of refraction in the range 1.3 to beyond 4.0. For example, some suitable materials are: Magnesium Fluoride (1.38), Thorium Fluoride (1.47), Cryolite (1.35), Silicon Dioxide (1.46), Aluminum Oxide (1.63), Hafnium Oxide (1.85), Tantalum Pentoxide (2.05), Niobium Oxide (2.19), Zinc Sulphide (2.27), Titanium Oxide (2.37), Silicon (3.5), Germanium (4.0), and Lead Telluride (5.0). Other dielectric materials would serve as well. Besides that, the fully dielectric band pass filter can also combine anti-reflective properties.

In an aspect, the bandpass filter can be a polymeric coating containing an appropriate mixture of dyes to create required absorbance or a combination of dielectric and polymeric structures.

The bandpass filter can allow a wavelength of light at which a sensor operates pass and can eliminate all other wavelengths. For example, the bandpass filter can block wavelengths in the visible and near IR spectral range, such as from about 400 to about 850 nm, and can transmit wavelengths above 850 nm. In this manner, the bandpass filter can reduce and/or eliminate unwanted radiation from reaching the optical device 10, 100, 110.

The optical stack 30 can be applied to the substrate 20 using any deposition or coating process, including a long throw magnetron sputtering process. The optical stack 30 can have at least one of the following properties: high density, strong interfacial adhesion strength, lack of structural defects, etc. The optical stack 30 can include a top layer of either aluminum trioxide or silicon dioxide.

An optical stack 30 with a terminal layer of silicon dioxide can have a high surface concentration of Si=O bonds and can provide reactive sites for attachment of a surface treating agent 40. Additionally, this creates an efficient barrier for ions diffusing from a substrate 20, such as glass. In particular, the presence of an ion diffusion barrier can reduce the possibility of potassium ions used in chemical glass strengthening from migrating to the interface between the top layer of the silicon dioxide and the surface treating agent 40. This can have a further effect in reducing the risk of any potassium ions contributing to hydrolytic degradation of siloxanes.

In an aspect, the optical device 10, 100, 110 can include a layer of sputter deposited dense aluminum trioxide that can act as a layer of synthetic sapphire. Depending upon the location of this aluminum trioxide layer within the optical stack 30 and depending upon the thickness of the aluminum trioxide layer, the final optical device 10, 100, 110, can offer increased resistance to mechanical scratching, abrasion, impact. For example, a top layer of aluminum trioxide in the optical stack 30 can provide additional mechanical durability and increase scratch resistance. As another example, a bottom layer of aluminum trioxide in the optical stack 30, such as the first layer interfacing with the substrate 20, such as glass, can act as an ion migration barrier. In an aspect, the bottom layer of aluminum trioxide can be present at a thickness ranging from about 0.5 µm to about 20 µm, for example from about 1 µm to about 15 µm, and as a further example, from about 3 µm to about 12 µm. This thickness can provide mechanical strength.

The optical device 10, 100, 110 disclosed herein can include a surface treating agent 40. The surface treating agent 40 can include a perfluoro(poly)ether group-containing silane compound which can form a layer having water-repellency, oil-repellency and antifouling property as well as high friction durability.

The perfluoro(poly)ether group-containing silane compound can have the following formula (1): 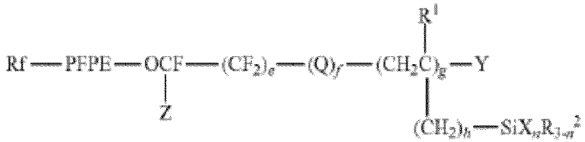 wherein:
Rf can be an alkyl group having 1 to 10 carbon atoms which may be substituted by one or more fluorine atoms; PFPE is (OC₄F₈)ₐ-(OC₃F₆)_{b}-(OC₂F₄)_{c}-(OCF₂)_{d}-; wherein a, b, c and d can each be independently an integer of 0 to 200, the sum of a, b, c and d is 1 or more, and the occurrence order of the respective repeating units in parentheses with the subscript a, b, c or d is not limited in the formula; Q can be an oxygen atom or a divalent organic group; R¹ can be a hydrogen atom or an alkyl group having 1 to 22 carbon atoms; R² can each be independently a hydrogen atom or an inert monovalent organic group; X can be a hydroxyl group or a hydrolysable group; Y can be a hydrogen atom or a halogen atom; Z can be a fluorine atom or a fluoroalkyl group having 1 to 5 carbon atoms; e can be an integer from 0 to 3; f can be 0 or 1; g can be an integer from 1 to 10; h can be an integer from 0 to 3; and n can be an integer from 1 to 3, wherein 80 mol % or more of the perfluoro(poly)ether group containing silane compound contained in the surface-treating agent is a compound wherein g is 2 or more.

The "alkyl group having 1 to 10 carbon atoms" in the alkyl group having 1 to 10 carbon atoms which can be substituted by one or more fluorine atoms can be a straight or branched alkyl group having 1-10 carbon atoms, for example a straight or branched alkyl group having 1-3 carbon atoms, and as a further example a straight alkyl group having 1-3 carbon atoms.

The above-described Rf can be an alkyl group having 1 to 10 carbon atoms which can be substituted by one or more fluorine atoms, for example a perfluoroalkyl group having 1 to 10 carbon atoms or CF₂H-C₁₋₉ perfluoroalkylene group, and as a further example a perfluoroalkyl group having 1 to 10 carbon atoms.

The perfluoroalkyl group having 1 to 10 carbon atoms can be a straight or branched perfluoroalkyl group having 1-10 carbon atoms, for example a straight or branched perfluoroalkyl group having 1-3 carbon atoms, and as a further example a straight perfluoroalkyl group having 1-3 carbon atoms, such as -CF₃, -CF₂CF₃ or -CF₂CF₂CF₃.

The surface treating agent 40 can be applied to the optical stack 30 using a wet coating method or a dry coating method. Non-limiting examples of a wet coating method include dip coating, spin coating, flow coating, spray coating, roll coating, gravure coating, and a similar method. Non-limiting examples of a dry coating method include deposition (usually, vacuum deposition), sputtering, chemical vapor deposition (CVD) and a similar method. The specific examples of the deposition method (usually, vacuum deposition) include resistance heating, electron beam, high-frequency heating, ion beam, and a similar method. The specific examples of the CVD method include plasma-CVD, optical CVD, thermal CVD and a similar method.

The surface treating agent 40 can have a high surface slip property and high friction durability. Furthermore, this surface treating agent 40 can have water-repellency, oil-repellency, antifouling property (for example, preventing from adhering a fouling such as fingerprints), waterproof property (preventing infiltration of water into electrical components, and the like), surface slip property (or lubricity, for example, wiping property of a fouling such as fingerprints and excellent tactile feeling in a finger) depending on a composition of the surface treating agent used, in addition to high friction durability.

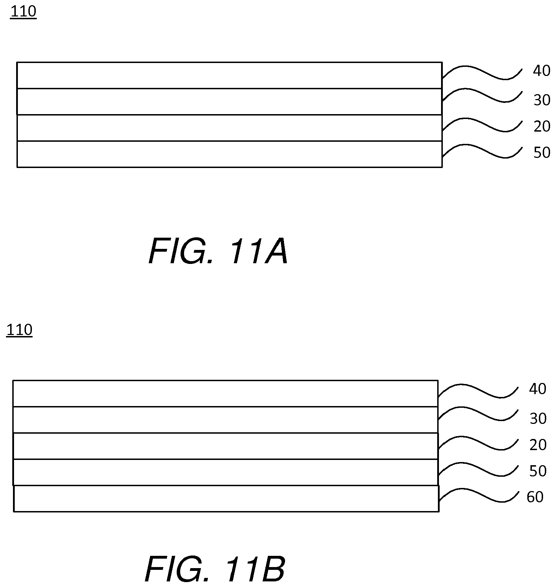

As shown in FIG. 11A, the optical device 110 can include a substrate 20 having on a first surface 21 an optical stack 30, and optionally a surface treating agent 40. The substrate 20 can also have on a second surface 22 an optional transparent optical conductor 50. The transparent optical conductor 50 can include any transparent material that can conduct a charge. For example, the transparent optical conductor 50 can include indium tin oxide or indium titanium oxide.

As shown in FIG. 11B, the optical device 110 can further include a hydrophilic layer 60 on the transparent optical conductor 50. In particular, the hydrophilic layer 60 can be present between the substrate 20 and a sensor (not shown). In this manner, the hydrophilic layer 60 can prevent or reduce condensation or fogging. The hydrophilic layer 60 (e.g., having a contact angle with water of less than 10 °) can also be a super-hydrophilic layer (e.g., having a contact angle with water of about 0 °). Non-limiting examples of materials useful in the hydrophilic layer 60 or super-hydrophilic layer include polyurethanes, siloxanes, metal oxides, polyglycols, and mixtures thereof. The hydrophilic layer 60 can be applied as a contiguous film having a thickness ranging from about 0.2 microns to about 20 microns, for example from about 0.5 to about 15 microns, and as a further example, from about 0.7 to about 13 microns. The materials used to form the hydrophilic layer can be nanoparticles applied with deposition processes to yield the disclosed thicknesses. Deposition processes include, but are not limited to, physical vapor deposition, such as evaporation atomic layer deposition, plasma enhanced chemical vapor deposition; and wet-chemical deposition processes, such as spraying, spin-coating, and roll coating techniques, for example, gravure, and transfer; etc.

In another aspect, the optical devices 10, 100, 110 disclosed herein can also include a secondary visual feature. The secondary visual feature can be seen by a user. Non-limiting examples of a secondary visual feature include a logo, symbol, number, pattern, color, etc.

A method of making an optical device 10 is also disclosed. The method of making the optical device 10 can include providing a substrate; and forming on the substrate a stack of layers including metal oxides using a long throw magnetron sputtering process. The method can also include applying a surface treating agent onto a top layer of the stack of layers of the optical device.

The method of making an optical device 10 can also include forming a stack of layers including metal oxides by a long throw magnetron sputtering process; and applying a surface treating agent onto a top layer of the stack of layers to form the optical device. The method can also include applying the optical device onto a substrate.

The long throw magnetron sputtering process used in the methods of making includes depositing a film in a chamber having a long throw distance between the target and the magnet array disposed adjacent the substrate. The long throw process may optionally include a grounded collimator and a circular magnet array. A long throw sputtering chamber can include a vacuum chamber enclosure wall having a gas inlet and an exhaust outlet connected to an exhaust pump. A substrate support pedestal can be disposed at one end of the chamber, and the sputtering target can be mounted to the other end of the chamber. The target can be electrically isolated from the enclosure wall by an insulator, and the enclosure wall can be grounded, so that a negative voltage may be maintained on the target with respect to the grounded enclosure wall. In operation, a substrate 20 can be positioned on the support pedestal at a long throw distance from the target of at least 50 mm, for example at about 80 to 175 mm.

An optical device, comprising: an optical stack of layers including metal oxides; and a surface treating agent. The optical device of claim 17, further comprising a substrate.

A method of making an optical device, comprising: forming an optical stack of layers including metal oxides by a long throw magnetron sputtering process; and applying a surface treating agent onto a top layer of the optical stack of layers to form the optical device. The method of claim 19, further comprising applying the optical device onto a substrate.

From the foregoing description, those skilled in the art can appreciate that the present teachings can be implemented in a variety of forms. Therefore, while these teachings have been described in connection with particular embodiments and examples thereof, the true scope of the present teachings should not be so limited. Various changes and modifications may be made without departing from the scope of the teachings herein.

This scope disclosure is to be broadly construed. It is intended that this disclosure disclose equivalents, means, systems and methods to achieve the devices, activities and mechanical actions disclosed herein. For each device, article, method, mean, mechanical element or mechanism disclosed, it is intended that this disclosure also encompass in its disclosure and teaches equivalents, means, systems and methods for practicing the many aspects, mechanisms and devices disclosed herein. Additionally, this disclosure regards a coating and its many aspects, features and elements. Such a device can be dynamic in its use and operation, this disclosure is intended to encompass the equivalents, means, systems and methods of the use of the device and/or article of manufacture and its many aspects consistent with the description and spirit of the operations and functions disclosed herein. The claims of this application are likewise to be broadly construed.

The description of the inventions herein in their many embodiments is merely exemplary in nature and, thus, variations that do not depart from the gist of the invention are intended to be within the scope of the invention. Such variations are not to be regarded as a departure from the spirit and scope of the invention.

## Claims

1. An optical device, comprising:
a substrate; and
an optical stack of layers including metal oxides.

2. The optical device of claim 1, further comprising a surface treating agent.

3. The optical device of claim 1, wherein the optical stack of layers includes at least one of an anti-reflective coating, a bandpass filter coating, notch filter coating, a dichroic filter coating, a mirror coating, and combinations thereof.

4. The optical device of claim 1, wherein the metal oxides include titanium dioxide (TiO₂), zirconium dioxide (ZrO₂), niobium pentoxide (Nb₂O₅), tantalum pentoxide (Ta₂O₅), hafnium dioxide (HfO₂), aluminum trioxide (Al₂O₃), silicon dioxide (SiO₂), scandium trioxide (Sc₂O₃), yttrium trioxide (Y₂O₃), magnesium dioxide (MgO₂), SiAlOₓ, SiOₓN_{y}, SiAlOₓN_{y}, and mixtures thereof.

5. The optical device of claim 1, wherein the optical stack of layers includes two layers of alternating different metal oxides.

6. The optical device of claim 1, wherein the optical stack of layers includes two layers of alternating different metal oxides with a top layer of aluminum trioxide.

7. The optical device of claim 1, wherein the optical stack of layers includes two layers of alternating different metal oxides with a bottom layer of aluminum trioxide.

8. The optical device of claim 1, wherein the metal oxide is aluminum trioxide, wherein the aluminum trioxide is a mechanical and chemical barrier.

9. The optical device of claim 1, wherein the optical stack of layers includes two layers of alternating different metal oxides with a top layer of silicon dioxide.

10. The optical device of claim 1, wherein the surface treating agent includes a perfluoro(poly)ether group-containing silane compound.

11. The optical device of claim 1, wherein the optical device exhibits mechanical and environmental durability for use under harsh mechanical and environmental conditions.

12. The optical device of claim 1, wherein the substrate has a first surface including an optical stack and a surface treating agent, and the substrate has a second surface including a transparent optical conductor.

13. The optical device of claim 12, wherein the transparent optical conductor includes indium tin oxide or indium titanium oxide.

14. The optical device of claim 12, further comprising on the second surface a hydrophilic layer or super-hydrophilic layer.

15. The optical device of claim 15, wherein the hydrophilic layer includes a material chosen from polyurethanes, siloxanes, metal oxides, polyglycols, and mixtures thereof.
